# EUROPEAN PATENT SPECIFICATION

(11) **EP 1 889 734 B1**
(45) Date of publication and mention of the grant of the patent: **19.10.2011**
(21) Application number: 07015984.3
(22) Date of filing: 14.08.2007
(51) Int. Cl.: B60B 27/00

(54) **Axle bearing apparatus and method of producing hub shaft for driving wheel bearing apparatus**
Achslagervorrichtung und Verfahren zur Herstellung einer Nabenwelle für eine Antriebsradlagervorrichtung
Palier et procédé de fabrication d'un moyeu pour palier d'une roue motrice

(30) Priority: 14.08.2006 JP 2006220896
(43) Date of publication of application: 20.02.2008
(73) Proprietor: JTEKT Corporation, Osaka-shi Osaka 542-8502 (JP)
(72) Inventor: Inoue, Shigeru, Osaka-shi, Osaka 542-8502 (JP); Harada, Takumi, Osaka-shi, Osaka 542-8502 (JP); Koma, Yutaka, Osaka-shi, Osaka 542-8502 (JP)
(74) Representative: Hager, Thomas Johannes

(56) References cited:
- EP-A- 1 621 858
- US-A1- 2005 223 557

## Description

### BACKGROUND OF THE INVENTION

### Described is an axle bearing apparatus, for

example, of an automobile, and more particularly an axle bearing apparatus for common use with a hub shaft of a driving wheel bearing apparatus and a hub shaft of a non-driven wheel bearing apparatus. The invention relates to a method of producing the hub shaft for the driving wheel bearing apparatus.

For example, a hub shaft of a driving wheel bearing apparatus for an automobile and a hub shaft of a non-driven wheel bearing apparatus have heretofore been provided separately from each other (see, for example, JP-A-2002-206538 and JP-A-2003-54210) . Recently, however, in order to reduce costs, there has been developed the type of bearing apparatus for common use with a hub shaft of a driving wheel bearing apparatus and a hub shaft of a non-driven wheel bearing apparatus.

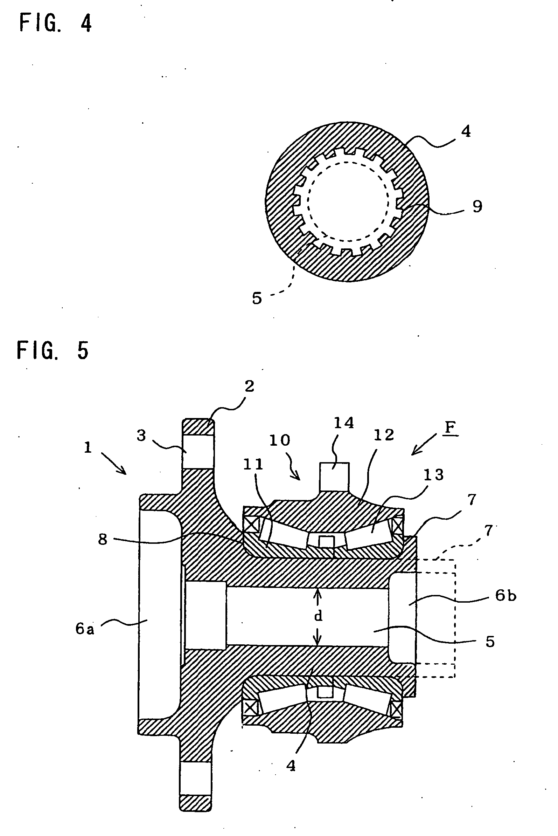

Fig. 5 is a cross-sectional view of a conventional non-driven wheel bearing apparatus for common use with a hub shaft of a driving wheel bearing apparatus and a hub shaft of the non-driven wheel bearing apparatus of an axle bearing apparatus. In the following description, the right side in the drawings will be referred to as "inner side", while the left side will be referred to as "outer side".

In Fig. 5, reference character F denotes the non-driven wheel bearing apparatus, and a flange 2 for mounting a wheel (not shown) thereon is formed on an outer periphery of a hub shaft 1 (made of a steel material) at an outer end portion thereof, the flange 2 having a plurality of bolt insertion holes 3. A cylindrical portion 4 for mounting a bearing portion 10 (described later) thereon is formed on the inner side of the flange 2, and extends in an axial direction. A through hole 5 having an inner diameter d is formed axially through a center portion of the cylindrical portion 4 in concentric relation to this cylindrical portion 4, and larger-diameter portions 6a and 6b are formed respectively at opposite ends of the through hole 5. A cylindrical caulking portion 7 (indicated in broken lines) for fixing the bearing portion 10 is formed at an inner end of the cylindrical portion 4, and projects radially outwardly.

The bearing portion 10 comprises an inner ring 11 divided into two sections each having a rolling contact surface (raceway surface) formed between ribs formed respectively at opposite ends thereof, an outer ring 12 having two rows of rolling contact surfaces, and two rows of tapered rollers (rolling elements) 13 disposed between the inner and outer rings 1] and 12, each row of tapered rollers 13 being disposed between the corresponding rolling contact surfaces of the inner and outer rings 11 and 12. Axial clearances (end play) are formed between each of the inner and outer rings 11 and 12 and the opposite ends of each tapered roller 13.

The bearing portion 10 is press-fitted onto the outer peripheral surface of the cylindrical portion 4 of the hub shaft 1, and then the caulking portion 7 is bent radially outwardly for caulking purposes as indicated in solid lines, and by doing so, the bearing portion 10 is held between a step portion 8 (formed at that portion of the cylindrical portion 4 disposed close to the flange 2) and the caulking portion 7 in such a manner that a preload is applied to this bearing portion 10. Then, the outer ring 12 is mounted on an axle case or other portion (not shown) through a flange 14 formed on the outer periphery of the outer ring 12 in such a manner that the outer ring 12 can not rotate.

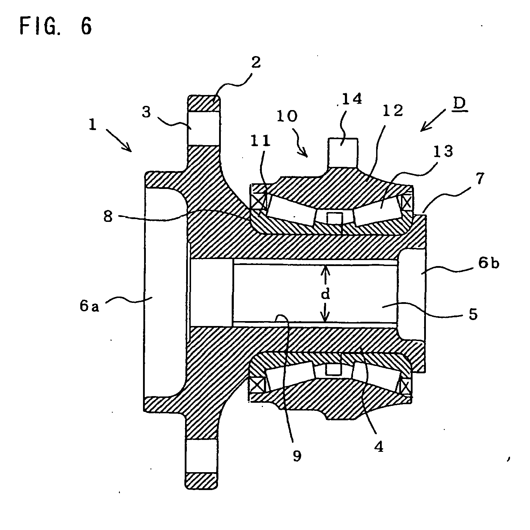

Fig. 6 is a cross-sectional view of the driving wheel bearing apparatus D. Although this driving wheel bearing apparatus D is provided with a hub shaft 1 identical in structure to the hub shaft 1 of the non-driven wheel bearing apparatus F, a female spline portion 9 defined by an axially-extending spline is formed on an inner peripheral surface of a through hole 5, and a spline shaft of a constant velocity joint (not shown) is fitted into this female spline portion 9. This female spline portion 9 is formed on the inner peripheral surface of the through hole 5 formed in the hub shaft 1 identical in structure to the hub shaft 1 of the non-driven wheel bearing apparatus F, and an inner diameter d of the female spline portion 9 defined by convex portions (ridges) thereof is equal to the inner diameter d of the through hole 5. Incidentally, any literature relating to the structures of Figs. 5 and 6 has not been found.

In the above axle bearing apparatus for common use with the hub shaft 1 of the driving wheel bearing apparatus D and the hub shaft 1 of the non-driven wheel bearing apparatus F, the bearing portion 10 is press-fitted on the cylindrical portion 4 of each hub shaft 1. However, the spline shaft of the constant velocity joint is fitted into the female spline portion 9 of the hub shaft 1 of the driving wheel bearing apparatus D, and therefore the bearing portion 10 of the driving wheel bearing apparatus D is tightened by this spline shaft, so that the axial clearances of this bearing portion 10 are reduced to become smaller than the axial clearances of the bearing portion 10 of the driven wheel bearing apparatus F, thus inviting a problem that the axial clearances of the two bearing portions are different from each other.
Therefore, in order to finally make the axial clearances of the two bearing portions equal to each other, there have been prepared two kinds of bearing portions 10 different in axial clearances from each other, and therefore the production and inventory management have been cumbersome, and the costs have been increased.
US 2005/0223557 A1 discloses a manufacturing method for drive wheel rolling bearing unit and a manufacturing apparatus thereof. To avoid a difficulty of inserting a spline shaft into a spline hole, respective holding members constituting a holding device for holding a hub are displaced in a radial inward direction of a small diameter stepped portion. The inner peripheral surface of the inside end of an original hole is elastically deformed radially inward the same as or slightly greater than the elastic deformation caused by externally securing tightly an inner ring to the small diameter stepped portion. In this condition, a female spline portion for constituting a spline hole is formed in the original hole.

### SUMMARY OF THE INTENTION

This invention has been made in order to solve the above problems, and an object of the invention is to provide an axle bearing apparatus for common use with a hub shaft of a driving wheel bearing apparatus and a hub shaft of a non-driven wheel bearing apparatus, in which there is provided a common-use hub shaft which can finally make axial clearances of bearing portions having the same structure press-fitted respectively on the hub shafts of the driving and non-driven wheel bearing apparatuses generally equal to each other, and a method of producing the hub shaft for the driving wheel bearing apparatus.
The object is solved by the features of claim 1.

In the axle bearing of the present invention, by processing part of the hub shaft (hub shaft material), the hub shaft can be used for both of the driving wheel bearing apparatus and the non-driven wheel bearing apparatus, and therefore the production and inventory management are easier, and besides the costs can be reduced.

### BRIEF DESCRIPTION OF THE DRAWINGS

Fig. 1 is a cross-sectional view of a hub shaft of a driven wheel bearing apparatus forming a preferred embodiment of an axle bearing apparatus of the present invention.
Fig. 2 is a cross-sectional view taken along the line A-A of Fig. 1.
Fig. 3 is a cross-sectional view of a hub shaft of a driving wheel bearing apparatus forming a preferred embodiment of an axle bearing apparatus of the invention.
Fig. 4 is a cross-sectional view taken along the line B-B of Fig. 3.

### DETAILED DESCRIPTION OF PREFERRED EMBODIMENTS

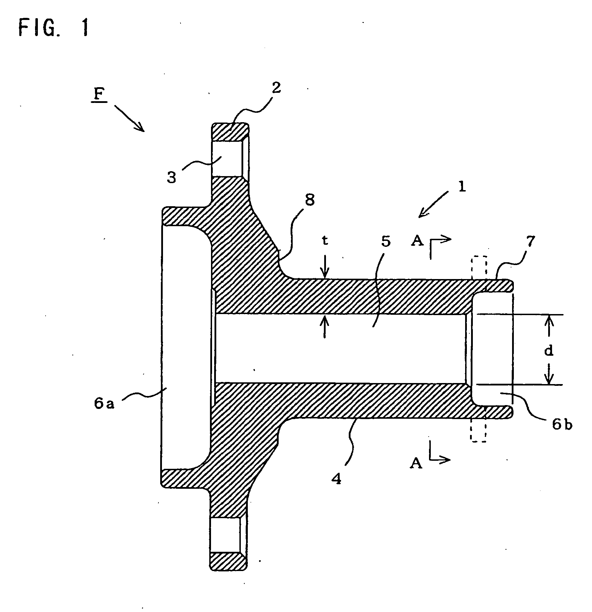

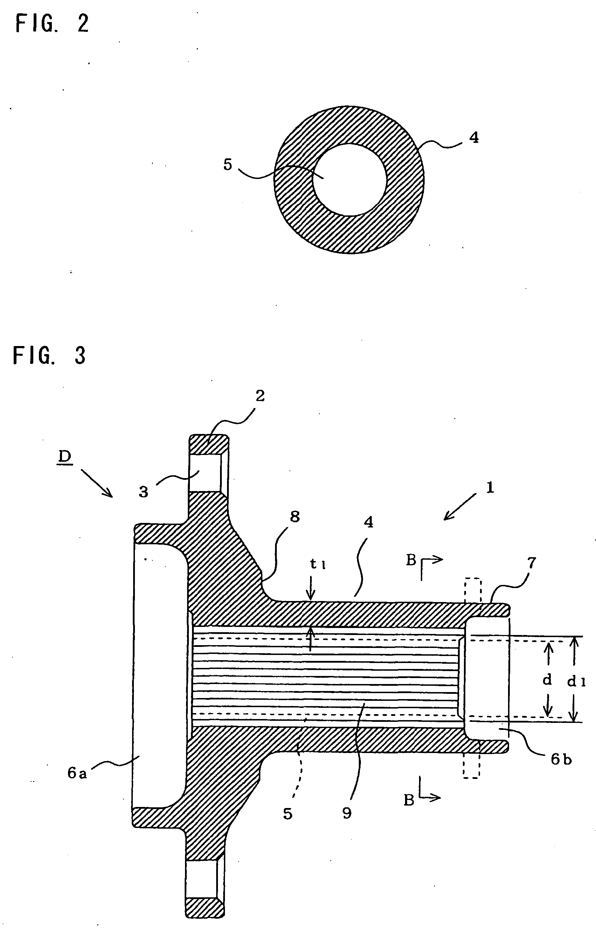

Fig. 1 is a vertical cross-sectional view of a hub shaft which is a main portion of a non-driven wheel bearing apparatus forming a preferred embodiment of an axle bearing apparatus of the present invention, Fig. 2 is a cross-sectional view taken along the line A-A of Fig. 1, Fig. 3 is a vertical cross-sectional view of a hub shaft which is a main portion of a driving wheel bearing apparatus forming a preferred embodiment of an axle bearing apparatus of the invention, and Fig. 4 is a cross-sectional view taken along the line B-B of Fig. 3. Those portions identical to the corresponding portions of the conventional structures of Figs. 5 and 6 will be designated by identical reference numerals, respectively, and part of description thereof will be omitted.

A material for each of the hub shafts 1 of the driving and non-driven wheel bearing apparatuses D and F (the axle bearing apparatus of the invention) is formed into a predetermined shape, for example, by forging, and a through hole 5 having an inner diameter d is formed axially through a center portion of a cylindrical portion 4 in concentric relation thereto. The inner diameter d of this through hole 5 is smaller than an outer diameter of a spline shaft of a constant velocity joint which is to be fitted into a female spline portion 9 formed on an inner surface of the through hole 5 in the hub shaft 1 of the driving wheel bearing apparatus D.
The hub shaft 1 of the non-driven wheel bearing apparatus F is finally formed by finishing end faces of a flange 2 and an outer peripheral surface of the cylindrical portion 4 of its hub shaft material by machining.

Similarly, with respect to the hub shaft 1 of the driving wheel bearing apparatus D, the cylindrical portion 4, etc., of its hub shaft material are finished by machining, and further the inner diameter of the through hole 5 is enlarged, that is, formed into a larger diameter d₁. This inner diameter d₁ corresponds to an inner diameter defined by grooves in the spline shaft of the above-mentioned constant velocity joint. Then, the female spline portion 9 is axially formed on the inner surface of the diameter-enlarged through hole 5. As a result, a wall thickness t₁ of the cylindrical portion 4 of the hub shaft 1 of the driving wheel bearing apparatus D is smaller than a wall thickness t of the cylindrical portion 4 of the hub shaft 1 of the non-driven wheel bearing apparatus F (t₁ < t)

When a bearing portion 10 is press-fitted on the cylindrical portion 4 of the hub shaft 1 of the non-driven wheel bearing apparatus F, the bearing portion 10 is tightened since the cylindrical portion 4 has the increased wall thickness t and hence increases rigidity, so that axial clearances of the bearing portion 10 are reduced (become smaller).
On the other hand, when a bearing portion 10 is press-fitted on the cylindrical portion 4 of the driving wheel bearing apparatus D, the amount of change (reduction) of axial clearances of the bearing portion 10 is smaller as compared with the non-driven wheel bearing apparatus F, since the cylindrical portion 4 has the reduced wall thickness t₁ and hence has low rigidity. However, when the spline shaft of the constant velocity joint is fitted into the female spline portion 9 of the hub shaft 1, the bearing portion 10 is tightened by this spline shaft, so that the axial clearances of the bearing portion 10 are reduced as described above.
In this case, the wall thickness t of the cylindrical portion 4 of the hub shaft 1 of the non-driven wheel bearing apparatus F is set to a predetermined value obtained by calculation, and by doing so, the amount of reduction of the axial clearances of the bearing portion 10 of the non-driven wheel bearing apparatus F and the amount of reduction of the axial clearance of the bearing portion 10 of the driving wheel bearing apparatus D can be made generally equal to each other.

Thus, in the invention, the wall thickness t of the cylindrical portion 4 of the hub shaft 1 of the non-driven wheel bearing apparatus F is larger than the wall thickness t₁ of the cylindrical portion 4 of the hub shaft 1 of the driving wheel bearing apparatus D, thereby the former cylindrical portion 4 has the higher rigidity. Therefore the axial clearances of the two bearing portions 10 press-fitted respectively on the cylindrical portions 4 of the hub shafts 1 of the non-driven and driving wheel bearing apparatuses F and D can be made generally equal to each other.

In the invention, the hub shaft material having the through hole 5 beforehand formed in the cylindrical portion 4 is prepared, and part of this hub shaft material is finished to provide the hub shaft 1 for the non-driven wheel bearing apparatus F. With respect to the driving wheel bearing apparatus D, part of the hub shaft material is finished, and then the through hole 5 is enlarged in diameter, and then the female spline portion 9 is formed on the inner surface of the diameter-enlarged through hole 5, thereby providing the hub shaft 1 for the driving wheel bearing apparatus D. Therefore, the common hub shaft (hub shaft material) 1 can be used for the non-driven and driving wheel bearing apparatuses F and D. Therefore, the production and inventory management are easier, and besides the costs can be reduced. Rolling elements 13 of the bearing portion 10 may be balls.

In the above description, although the present invention is applied to the illustrated axle bearing apparatus, the invention is not limited to it, but can be applied to any other suitable axle bearing apparatus. The rolling elements 13 of the bearing portion 10 may be balls.

## Claims

1. A method of producing a driving wheel bearing apparatus (D) from a common hub shaft (1) for a non-driven wheel bearing apparatus (F), the method comprising:
- providing a hub shaft (1) that includes an axle-mounting flange (2) formed at an outer end portion thereof, and a cylindrical portion (4) formed at an inner side of the flange and having a through hole (5) of a first diameter (d) formed in a center portion of the cylindrical portion (4), said hub shaft (1) adapted to be used for the non-driven wheel bearing apparatus (F);
- enlarging the first diameter (d) of the through hole (5) of the hub shaft (1) (1) to a second diameter (d1);
- forming a spline (9) in an inner surface of the diameter-enlarged through hole (5) so as to extend in an axial direction of the diameter-enlarged through hole (5), thereby providing the hub shaft (1) adapted to be used for the driving wheel bearing apparatus (D); and
- press-fitting a bearing portion (10) on the cylindrical portion of the hub shaft (1), the bearing portion comprising an inner ring (11), an outer ring (12) and rolling elements (13) disposed between the inner and outer rings (11, 12), wherein:
- the second diameter (d1) corresponds to an inner diameter defined by convex portions of the spline (9); and
- the enlarging is performed such that a reduction amount of an axial clearance of the bearing portion (10) for the non-driven wheel bearing apparatus (F) and a reduction amount of an axial clearance of the bearing portion (10) for the driving wheel bearing apparatus (D) are made generally equal to each other.

## Patentansprüche

1. Verfahren zum Herstellen einer Antriebsrad-Lagervorrichtung (D) aus einer gemeinsamen Nabenwelle (1) für eine Lagervorrichtung (F) für ein nicht angetriebenes Rad, wobei das Verfahren umfasst:
- Bereitstellen einer Nabenwelle (1), die einen Achsbefestigungsflansch (2), der an einem Außenendbereich davon ausgebildet ist, und einen zylindrischen Bereich (4), der an einer Innenseite des Flansches ausgebildet ist und ein Durchgangsloch (5) mit einem ersten Durchmesser (d), das in einem Mittelbereich des zylindrischen Bereichs (4) ausgebildet ist, aufweist, umfasst, wobei die Nabenwelle (1) ausgelegt ist, für die Lagervorrichtung (F) für das nicht angetriebene Rad verwendet zu werden;
- Vergrößern des ersten Durchmessers (d) des Durchgangslochs (5) der Nabenwelle (1) auf einen zweiten Durchmesser (d1);
- Ausbilden einer Keilverzahnung (9) in einer Innenfläche des Durchgangslochs (5) mit vergrößertem Durchmesser, damit sich diese in einer axialen Richtung des Durchgangslochs (5) mit vergrößertem Durchmesser erstreckt, wodurch vorgesehen wird, dass die Nabenwelle (1) ausgelegt ist, für die Antriebsrad-Lagervorrichtung (D) verwendet zu werden; und
- Einpassen eines Lagerbereichs (10) auf dem zylindrischen Bereich der Nabenwelle (1) mittels Presspassung, wobei der Lagerbereich einen Innenring (11), einen Außenring (12) und Wälzelemente (13), die zwischen dem Innen- und Außenring (11, 12) angeordnet sind, umfasst, wobei:
- der zweite Durchmesser (d1) einem Innendurchmesser entspricht, der durch konvexe Bereiche der Keilverzahnung (9) definiert ist; und
- das Vergrößern so durchgeführt wird, dass ein Verringerungsbetrag eines axialen Spielraums des Lagerbereichs (10) für die Lagervorrichtung (F) für das nicht angetriebene Rad und ein Verringerungsbetrag eines axialen Spielraums des Lagerbereichs (10) für die Antriebsrad-Lagervorrichtung (D) im Allgemeinen gleich sind.

## Revendications

1. Procédé de fabrication d'un dispositif formant palier de roue motrice (D) à partir d'un arbre de moyeu (1) commun pour un dispositif formant palier de roue non motrice (F), le procédé comprenant :
- la préparation d'un arbre de moyeu (1) qui présente une bride de montage d'essieu (2) formée au niveau d'une partie d'extrémité externe de celui-ci, et une partie cylindrique (4) formée sur un côté interne de la bride et comportant un orifice traversant (5) d'un premier diamètre (d) formé sur une partie centrale de la partie cylindrique (4), ledit arbre de moyeu (1) étant adapté de manière à être utilisé pour le dispositif formant palier de roue non motrice (F) ;
- l'agrandissement du premier diamètre (d) de l'orifice traversant (5) de l'arbre de moyeu (1) à un deuxième diamètre (d1) ;
- la formation d'une cannelure (9) sur une surface interne de l'orifice traversant de diamètre agrandi (5) de telle sorte qu'elle s'étende dans une direction axiale de l'orifice traversant de diamètre agrandi (5), produisant ainsi l'arbre de moyeu (1) adapté afin de pouvoir être utilisé pour le dispositif formant palier de roue motrice (D) ; et
- l'assemblage à force d'une partie de palier (10) sur la partie cylindrique de l'arbre de moyeu (1), la partie de palier comprenant une bague interne (11), une bague externe (12) et des éléments roulants (13) disposés entre les bagues interne et externe (11, 12), dans lequel :
- le deuxième diamètre (d1) correspond à un diamètre interne défini par des parties convexes de la cannelure (9) ; et
- l'agrandissement est réalisé de telle sorte qu'une réduction de valeur d'un jeu axial de la partie de palier (10) pour le dispositif formant palier de roue non motrice (F) et une réduction de valeur d'un jeu axial de la partie de palier (10) pour le dispositif formant palier de roue motrice (D) sont sensiblement égales l'une à l'autre.
